# EUROPEAN PATENT SPECIFICATION

(11) **EP 2 168 218 B1**
(45) Date of publication and mention of the grant of the patent: **29.07.2015**
(21) Application number: 08763347.5
(22) Date of filing: 16.06.2008
(51) Int. Cl.: H02G 3/04

(54) **CABLE ROUTING ELEMENT**
KABELVERLEGUNGSELEMENT
ÉLÉMENT DE GUIDAGE DE CÂBLE

(30) Priority: 20.06.2007 FR 0704395
(43) Date of publication of application: 31.03.2010
(73) Proprietor: CQFD Composites, 69100 Villeurbanne (FR)
(72) Inventor: CHAUZU, René, F-91310 Linas (FR); CHAUZU, Frank, F-67210 Obernai (FR)
(74) Representative: Jeannet, Olivier
(86) International application number: PCT/IB2008/052364
(87) International publication number: WO 2008/155709

(56) References cited:
- US-B1- 6 340 141

## Description

The present invention concerns a cable routing element. It also concerns a method for manufacturing this cable routing element.

It is well known to route cables in a cable routing element made up of a plurality of joined elements have a U-shaped transverse cross-section. One primarily distinguishes two types of these elements: a first type, commonly called "cable rack", is generally either in the shape of a single-piece structure, solid or partially open, or in wire-mesh form having large openings; a second type, commonly called "cable ladder", is most often found as the assembly of two parallel beams forming the side walls of the ladder and regularly spaced horizontal members constituting the back of this ladder. The very large majority of the cable routing elements are made of metal, more rarely in synthetic materials.

Document US 6 340 141 B1 illustrates a device of the prior art.

The known elements have several drawbacks.

In the first place, when they are metallic, they are relatively heavy, difficult to manipulate, lead to significant risks of injury for installers and have risks of damaging the cables.

Moreover, the existing elements made of metal are not electrically insulting and can also be very sensitive to atmospheric corrosion.

Lastly, elements of the "cable ladder" type have an assembly method which is relatively lengthy to implement and generally require coupling accessories between beams and horizontal members. These accessories increase the cost of the final product, slow production rhythms and can limit the ability to deliver these products in detached pieces, such as, for example, in the case of an assembly by gluing or riveting, which is generally done in a factory.

There are also cable routing elements made in a synthetic material, which resolve the abovementioned drawbacks but generally have poor heat dissipation, reduced accessibility to cables and remain very bulky to transport and store, which leads to non-negligible logistical cost overruns.

Also known is a cable routing element comprising two side beams and a bottom, designed to be assembled to each other. Each beam is formed by molding in one piece of a limited length and can have, in its core, openings designed to facilitate the passage of cables.

Also known is a cable routing element formed of a succession of U-shaped single-piece parts, forming the framework of the cable routing element, these parts being gone through by rods made integral therewith by blocking wedges and having open areas favoring heat dissipation.

These types of elements only partially resolve the abovementioned drawbacks.

The present invention aims to resolve all of the drawbacks of the existing cable routing elements cited above.

The cable routing element it concerns comprises, in a known manner, at least one side beam and a bottom.

According to the invention,
- at least one beam comprises at least two longitudinal bars and bracing pieces rigidly connected to these longitudinal bars, said longitudinal bars extending over the entire length of the beam and said bracing pieces being arranged gradually on these longitudinal bars and maintaining them apart from each other; rounded areas being arranged at the level of at least one beam;
- said bottom comprises rounded hooks able to engage on said rounded areas, with the possibility of pivoting between a first position, in which the beam is substantially in the same plane as said bottom, and a second position, wherein the beam is substantially perpendicular to this bottom; and
- said beam and said bottom comprise respective locking means, engaging when the beam is brought into said second position.

Thus, said beam comprises at least two longitudinal bars which can be obtained inexpensively through industrial methods, in large lengths; these longitudinal bars are rigidly connected to the bracing pieces and are maintained separated from each other by these bracing pieces, arranged gradually on the longitudinal bars. The rounded areas developed at the level of said beam receive the rounded hooks of said bottom and thereby make it possible for the beam to be pivoted between a first, unlocked position, in which it extends in the same plane as the bottom, and a second, locked position, in which it extends perpendicularly to this bottom. The first position allows storage and transport of the beam and the bottom, flat or in an L-shaped configuration in the case of a single articulated beam, which makes it possible to greatly reduce the volume needed for storage of the cable routing elements.

The cable routing element according to the invention has a high bending rigidity when it is loaded, granted primarily by said longitudinal bars, the spacing of these bars and the spacing of the bracing pieces, while also having a relatively reduced mass. Moreover, the beam can be obtained without cost overrun in large lengths.

This cable routing element is also easily adaptable, on the installation site, to various situations which may arise, given its relative flexibility of lateral deformation, ease of cutting said longitudinal bars to the desired length, and the possibility of cutting one of these bars to increase the flexibility of the element locally.

Moreover, the cable routing element according to the invention is electrically insulating, does not generate any risk of damaging the cables, has a good heat dissipation capacity, is easy to clean, allows good access to the cables, and is easy to customize insofar as one and/or the other of the longitudinal bars, and/or one or several of said bracing pieces, can have specific colors.

Said locking means can comprise ratcheting areas arranged on said beam, on one hand, and on said bottom, on the other hand, and engaging when said beam is brought into the second position.

At least one bracing piece can comprise a window designed to receive, fittingly, one of the rounded hooks comprised by the bottom. The bracing piece makes it possible, among other things, to ensure longitudinal wedging of the bottom relative to the beam.

According to one possibility, in this case, said locking means comprises at least one ratcheting area arranged on at least one hook of said bottom and at least one corresponding edge of at least one bracing piece defining said window, this edge engaging with this ratcheting area in said second position of the beam.

According to another possibility, said locking means comprises notches arranged on said rounded areas of the beams and on the rounded hooks of the bottom, these notches cooperating by inter-engaging during rotation of the beam to block said beam in each angular position at the opening.

Advantageously, said bottom and said beam comprise stop and positioning means determining said second position of the beam relative to the bottom.

Blocking of the beam in said second position is thus done easily, quickly, reliably, as a result of the rotation of the beam.

The bottom can comprise a plurality of horizontal members designed to be connected to the beam, having ends forming said hooks; this bottom can be made up solely of these horizontal members, or can have a single-piece structure, solid or partially open, having regularly-spaced side extensions forming said hooks.

Said horizontal members are preferably made in a single piece of molded material, in particular in thermoplastic material, reinforced or not, or in a fiberglassreinforced thermosetting material known under the name SMC ("Sheet Molding compound").

According to another embodiment, each of said horizontal members comprises one part forming a body and at least one end part forming said hook, assembled to said part forming a body.

In this case, the parts forming the body can be manufactured in different lengths and can receive, on at least one of their ends, an end part forming said hook; this horizontal member structure thus makes it possible to obtain cable routing elements having varied widths for moderate equipment investments.

Advantageously, said horizontal members have an omega-type cross-section.

These horizontal members have a very great bending stability, given the side rims they comprise, and are easy to mold.

The horizontal members can comprise cable hanging areas in the upper part, in particular in the form of openings. Their side edges can also form lower hanging areas.

Each bracing piece can be made in a synthetic material, and be obtained in particular by injection. It can be open to reduce the mass of the cable routing element.

Preferably, said bars comprised by the beam are profiled. They advantageously have a cylindrical shape.

These bars can be in a composite material. They can be obtained through an industrial profiling method such as pultrusion.

The method for producing the cable routing element according to the invention comprises the steps of:
- obtaining longitudinal bars;
- arranging bracing pieces of these longitudinal bars;
- producing a rigid assembly of said longitudinal bars and said bracing pieces, the latter pieces being arranged gradually along the longitudinal bars;
- obtaining said bottom provided with rounded hooks; and
- assembling the bottom to the beams in a substantially co-planar position of these beams and this bottom.

The method can include the step of over molding said bracing pieces on said longitudinal bars.

The arrangement of these bracing pieces and their assembly to said longitudinal bars are thus done simultaneously.

Alternatively, the method can comprise the steps of:
- arranging said bracing pieces with oblong holes for receiving said longitudinal bars; and
- forceably sticking these longitudinal bars through these holes.

Alternatively, the method can comprise the steps of:
- arranging each bracing piece in the form of two half-shells able to be assembled to each other;
- engaging said longitudinal bars between the half-shells of one or several bracing pieces;
- closing the half-shells of this or these bracing piece(s) by exerting a tightening on said longitudinal bars, and
- fixing these half-shells to each other by gluing or melting of the materials.

The method can comprise the steps of:
- obtaining the horizontal members by profiling, arranging, at at least one of the ends of each horizontal member, a hot-formable part to make up said rounded hook, and
- hot-forming said end of each horizontal member to make up said rounded hook provided with notches.

The invention will be well understood, and other characteristics and advantages thereof will appear, in reference to the appended diagrammatic drawing, illustrating, as non-limiting examples, several possible embodiments of a cable routing element it concerns.
Figure 1 is a perspective view, before assembly, of a cable routing element according to a first embodiment;
figure 2 is an enlarged view of a portion of a beam comprised by this cable routing element, during assembly;
figure 3 is a perspective view of a horizontal member comprised by the cable routing element;
figure 4 is an enlarged perspective view, from another angle, of one end of the horizontal member;
figure 5 is a cross-sectional view, before assembly, of two beams and a horizontal member comprised by the routing element;
figure 6 is a view of the routing element similar to figure 5, during assembly;
figure 7 is a perspective view of this element, after assembly;
figure 8 is a cross-sectional view of two beams and a horizontal member comprised by the routing element, according to another embodiment.

For simplification, the parts or elements of one embodiment which are found identically or similarly in another embodiment will be identified using the same numerical references and will not be described again.

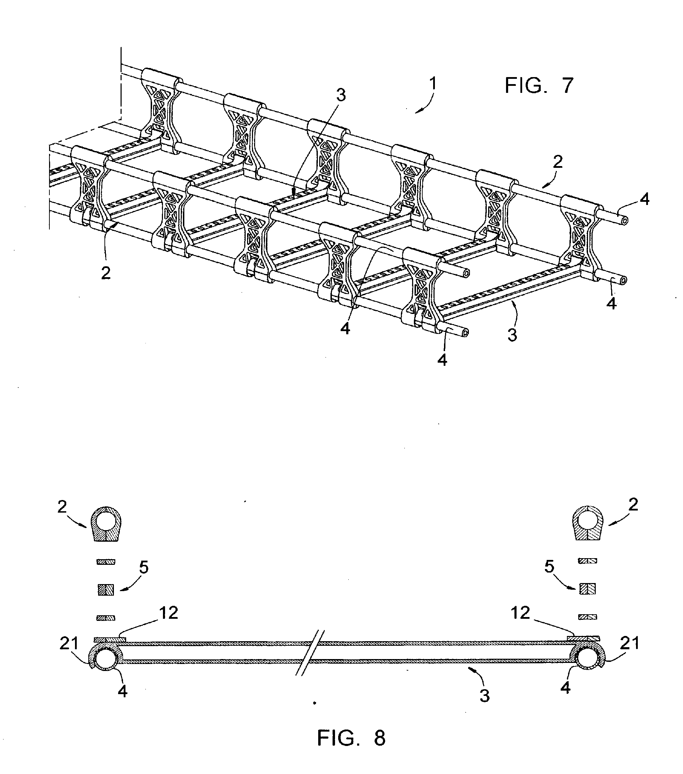

Figure 7 shows a cable routing element 1 comprising two parallel beams 2 forming the side walls of the element 1, and regularly-spaced horizontal members 3, connected to the beams 2 and constituting the bottom of this element 1.

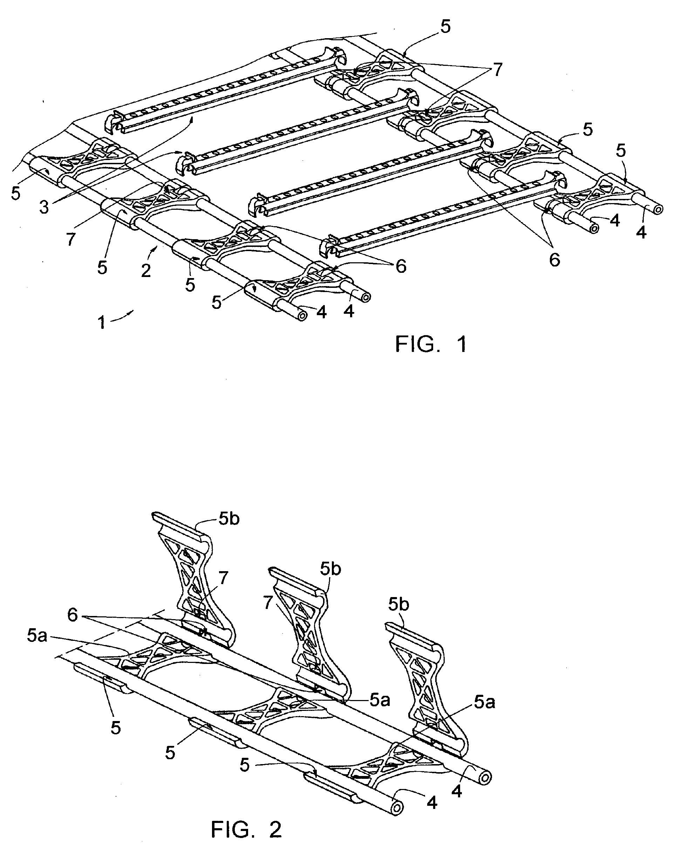

As shown more particularly in figures 1 and 2, each beam 2 comprises two longitudinal bars 4 having a cylindrical cross-section and bracing pieces 5 connected to these longitudinal bars 4.

The bars 4 are made in a composite material and are produced through the "pultrusion" technique.

The bracing pieces 5 are, in the example illustrated in figure 2, made by injection of a plastic material in the shape of two half-shells 5a, 5b connected to each other at one of their edges by a hinge-film and able to be assembled together by gluing or melting of their material. The bars 4 are engaged between the half-shells 5a, 5b of several bracing pieces 5 and the half-shells are closed on these bars 4 while exerting a griping thereon, then are fixed two by two via gluing or melting of the materials.

Each bracing piece 5 is open and comprises, overlapping the junction area on one half-shell 5a, 5b to the other, a median opening arranged through it. This opening makes it possible, when the piece 5 is in place on the bars 4, to define a window 6 through which a rounded hook of a horizontal member 3 can be fittingly engaged, as will be described below. Given the material and the open structure of the piece 5, the edge 7 of each piece 5 defining the window 6 of the side opposite the bar 4 is slightly deformable to allow ratcheting of the piece 5 on a ratcheting area of a horizontal member 3, as will also be described below.

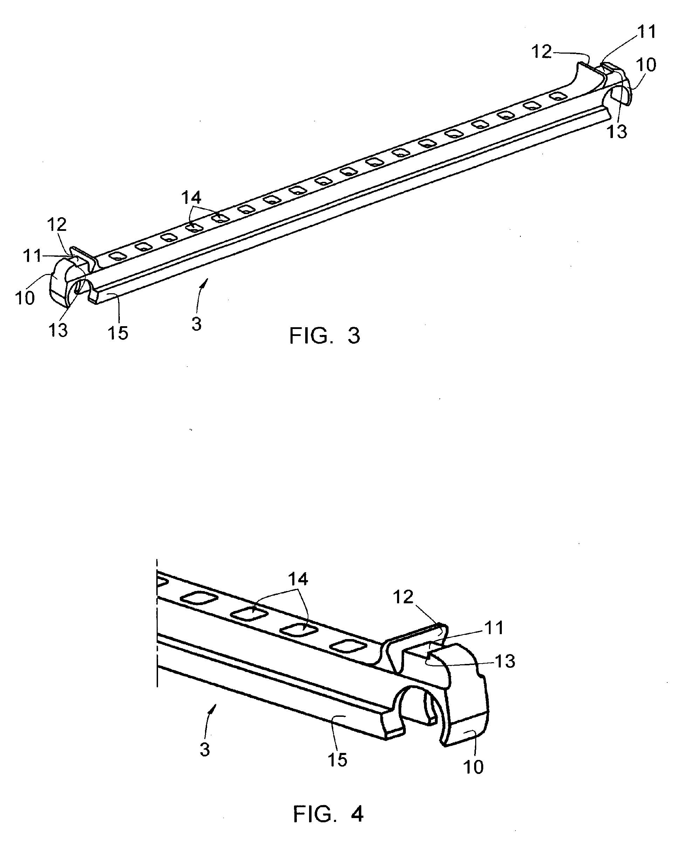

The horizontal members 3 are made in a fiberglass-reinforced thermoplastic material. As shown more particularly in figures 3 and 4, they have an omega-shaped cross-section and comprise hooks 10, clicking areas 11 and stop rims 12.

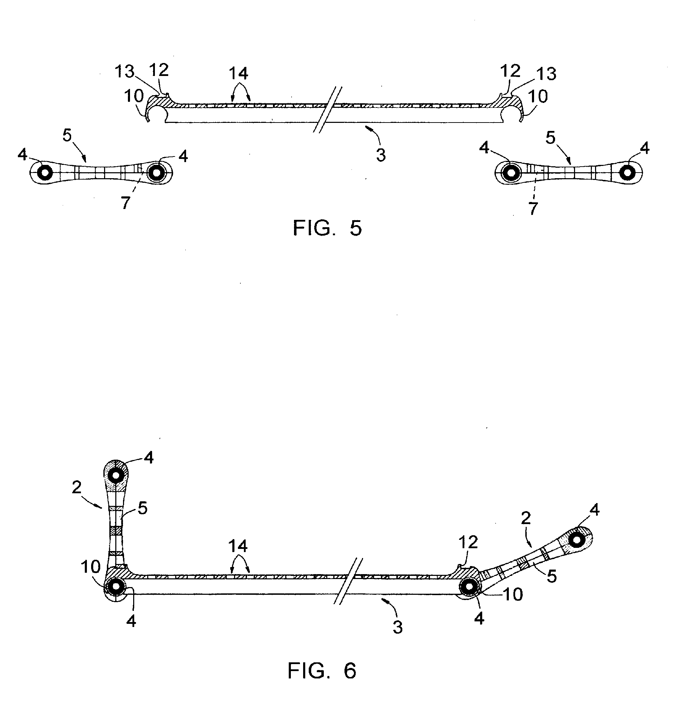

The rounded hooks 10 are able to engage around a bar 4, through the windows 6, as previously indicated. They also allow, as visible in figures 5 and 6, a pivoting of the beams 2 between a first position in which the beams 2 are substantially in the same plane as the horizontal members 3 (cf. figures 1 and 5) and a second position in which the beams 2 are substantially perpendicular to these horizontal members 3 (cf. figures 6 and 7).

The fitted engagement of these hooks 10 in the windows 6 allows the pieces 5 to ensure the maintenance of the hooks 10 around the bar 4 and to longitudinally wedge the horizontal members 3 relative to the beams 2.

Each ratcheting area 11 is defined on one hand by the stop rim 12 and on the other by a notch 13. The edge 7 of each piece 5 crosses this notch 13 when the beam 2 arrives in said second position and is held in this position by this notch. The rim 12 makes it possible to ensure the immobilization of the beam 2 in said second position.

Each horizontal member 3 also comprises, in the upper part, openings 14 designed to form cable hanging areas at this horizontal member 3 and in the lower part, side rims 15 also able to serve as hanging areas and whereof the ends in contact with the beam 2 serve as side stabilizers.

Figure 8 shows another embodiment of the element 1, in which the horizontal members 3 have a profiled shape, making it possible to obtain them by profiling. Each horizontal member 3 comprises end parts 21 able to be hot-deformed according to a rounded shape provided with notches, so as to form the hooks 10.

These end parts 21 are arranged with a series of notches on their surfaces designed to form the internal surfaces of the hooks 10, and corresponding notches are arranged on the rounded portions of the bracing pieces 5 designed to receive these hooks. The inter-engagements of these notches enable the blocking of the beam 2 at the opening during the rotation of said beam 2, each horizontal member 3 being provided with ratcheting areas 11.

Each bracing piece 5 also comprises a protruding rim 12 designed to bear on the corresponding horizontal member 3 in said second position, this rim 12 thus constituting the stop and positioning means of the beam 2 in this position.

The invention thus provides a cable routing element making it possible to resolve, under the best conditions, the drawbacks of similar systems of the prior art.

The invention was described above in reference to several embodiments, provided as examples. It goes without saying that it is not limited to these embodiments, but that it extends to all embodiments covered by the appended claims.

## Claims

1. Cable routing element (1), comprising at least one side beam (2) and a bottom (3), wherein
- at least one beam (2) comprises at least two longitudinal bars (4) and bracing pieces (5) rigidly connected to these longitudinal bars (4), said longitudinal bars (4) extending over the entire length of the beam (2) and said bracing pieces (5) being arranged gradually on these longitudinal bars (4) and maintaining them apart from each other; rounded areas being arranged at the level of at least one beam (2);
- said bottom (3) comprises rounded hooks (10) able to engage on said rounded areas, **characterized in that** said bottom (3) provided with rounded hooks (10) can pivote between a first position, in which the beam (2) is substantially in the same plane as said bottom (3), and a second position, wherein the beam (2) is substantially perpendicular to this bottom (3); and
- said beam (2) and said bottom (3) comprise respective locking means (7, 11, 13), engaging when the beam (2) is brought into said second position.

2. Cable routing element (1) according to claim 1, **characterized in that** said locking means comprise ratcheting areas (7, 11) arranged on said beam (2), on one hand, and on said bottom (3), on the other hand.

3. Cable routing element (1) according to claim 1 or claim 2, **characterized in that** at least one bracing piece (5) comprise a window (6) designed to receive, fittingly, one of the rounded hooks (10) comprised by the bottom (3).

4. Cable routing element (1) according to claim 3, **characterized in that** said locking means comprises at least one ratcheting area (11) arranged on at least one hook (10) of said bottom (3) and at least one corresponding edge (7) of at least one bracing piece (5) defining said window (6), this edge (7) engaging with this ratcheting area (11) in said second position of the beam (2).

5. Cable routing element (1) according to claim 1, **characterized in that** said locking means comprises notches arranged on said rounded areas of the beams (2) and on the rounded hooks (10) of the bottom (3), these notches cooperating by inter-engaging during rotation of the beam to block said beam in each angular position at the opening.

6. Cable routing element (1) according to any of claims 1 to 5, **characterized in that** said bottom (3) and said beam (2) comprise stop and positioning means (12) determining said second position of the beam (2) relative to the bottom (3).

7. Cable routing element (1) according to any of claims 1 to 6, **characterized in that** said bottom comprises a plurality of horizontal members (3) designed to be connected to the beam (2), having ends forming said hooks (10); this bottom can be made up solely of these horizontal members (3), or can have a single-piece structure, solid or partially open, having regularly-spaced side extensions forming said hooks (10).

8. Cable routing element (1) according to claim 7, **characterized in that** said horizontal members are made in a single piece of molded material, in particular in thermoplastic material, reinforced or not.

9. Cable routing element (1) according to claim 7, **characterized in that** each of said horizontal members comprises one part forming a body and at least one end part forming said hook, assembled to said part forming a body.

10. Cable routing element (1) according to any of claims 7 to 9, **characterized in that** said horizontal members (3) have an omega-type cross-section.

11. Cable routing element (1) according to any of claims 1 to 10, **characterized in that** each bracing piece (5) is made in a synthetic material, and is obtained in particular by injection.

12. Cable routing element (1) according to any of claims 1 to 11, **characterized in that** said bars (4) are obtained through an industrial profiling method such as pultrusion.

13. Method for producing the cable routing element (1) according to any of claims 1 to 12, comprising the step of:
- obtaining longitudinal bars (4);
- arranging bracing pieces (5) of these longitudinal bars (4);
- producing a rigid assembly of said longitudinal bars (4) and said bracing pieces (5), the latter pieces being arranged gradually along the longitudinal bars (4);
- obtaining said bottom (3) provided with rounded hooks; and
**characterized in that** it comprises the steps of:
- assembling the bottom (3) to the beams (2) in a substantially co-planar position of these beams and this bottom.

14. Method according to claim 13, **characterized in that** it includes the step of over molding said bracing pieces (5) on said longitudinal bars (4).

15. Method according to claim 13, **characterized in that** it comprises the steps of:
- arranging each bracing piece (5) in the form of two half-shells (5a, 5b) able to be assembled to each other;
- engaging said longitudinal bars (4) between the half-shells (5a, 5b) of one or several bracing pieces (5);
- closing the half-shells (5a, 5b) of this or these bracing piece(s) (5) by exerting a tightening on said longitudinal bars (4), and
- fixing these half-shells to each other by gluing or melting of the materials.

## Patentansprüche

1. Kabelführungselement (1), umfassend mindestens einen Seitenstrahl (2) und einem Boden (3), wobei:
- Wenigstens einen Träger (2) aus mindestens zwei Längsstangen (4) und Stützteile (5) starr an diesen Längsholmen (4) verbunden ist, wobei die Längsstangen (4) über die gesamte Länge des Trägers (2) verlauf und die Stützteile (5) nach und nach an diesen Längsholmen (4) angeordnet und voneinander Beibehaltung voneinander; (2) abgerundete Bereiche werden auf der Ebene von mindestens einem Strahl angeordnet ist;
- Der Boden (3) abgerundete Haken (10) eingreifen können auf der abgerundeten Bereiche, daß der Boden (3) mit abgerundeten Haken (10) vorgesehen ist zwischen einer ersten Position zu schwenken, in der der Strahl (2) umfasst, im wesentlichen in der gleichen Ebene wie der Boden (3) und einer zweiten Position, bei der der Träger (2) im wesentlichen senkrecht zu diesem Boden (3); und
- Der Strahl (2) und dem Boden (3) jeweilige Verriegelungsmittel (7, 11, 13) eingreift, wenn der Strahl (2) in die zweite Position gebracht wird.

2. Kabelführungselement (1) nach Anspruch 1, daß die Verriegelungsmittel umfassen Ratschenflächen (7, 11), die auf den Strahl (2) auf der einen Seite und auf dem Boden (3), anderer Hand.

3. Kabelführungselement (1) nach Anspruch 1 oder Anspruch 2, **dadurch gekennzeichnet, dass** zumindest ein Versteifungsteil (5) ein Fenster (6) für den Empfang, passenderweise eine der abgerundeten Haken (10) durch die umfaßt Boden (3).

4. Kabelführungselement (1) nach Anspruch 3, **dadurch gekennzeichnet, dass** die Verriegelungseinrichtung zumindest einen Rastbereich (11), die auf zumindest einen Haken (10) des Bodens (3) und zumindest eine entsprechende Kante (7) von mindestens einem Versteifungsstück (5) definieren, das Fenster (6), dieser Rand (7) aufweist, die mit diesem Sperrklinkenbereich (11) in der zweiten Position des Trägers (2).

5. Kabelführungselement (1) nach Anspruch 1, daß die Verriegelungseinrichtung aufweist Kerben angeordnet Rundungen der Träger (2) und an der runden Haken (10) des Bodens (3), wobei diese Kerben zusammenwirkt durch ineinandergreif während der Rotation des Strahls zu blockieren, Strahls in jeder Winkelstellung in die Öffnung.

6. Kabelführungselement (1) nach einem der Ansprüche 1 bis 5, gekennzeichnet, dass der Boden (3) und die genannten Träger (2) umfassen Anschlag und Positioniermittel (12), Bestimmen der zweiten Position des Trägers (2) gegen mit dem Boden (3).

7. Kabelführungselement (1) nach einem der Ansprüche 1 bis 6, **dadurch gekennzeichnet, daß** die Boden eine Mehrzahl von horizontalen Gliedern (3) entwickelt, um auf den Strahl (2) verbindbar ist, mit Enden bilden die Haken (10) ; Dieses Sumpf kann ausschließlich aus diesen horizontalen Elementen (3) durchgeführt werden, oder können eine einzelne einstückige Struktur, fest oder teilweise geöffnet ist, mit regelmäßig beabstandeten Seitenverlängerungen bilden die Haken (10) aufweist.

8. Kabelführungselement (1) nach Anspruch 7, **dadurch gekennzeichnet, dass** die horizontalen Elemente gekennzeichnet sind in einem einzigen Stück aus geformtem Material, insbesondere aus thermoplastischem Material hergestellt ist, verstärkt oder nicht.

9. Kabelführungselement (1) nach Anspruch 7, **dadurch gekennzeichnet, daß** jedes der horizontalen Elemente besteht aus einem Teil, der einen Körper und mindestens ein Endstück Ausbilden des Hakens montiert bildende Teil einen Körper.

10. Kabelführungselement (1) nach einem der Ansprüche 7 bis 9, **dadurch gekennzeichnet, dass** die horizontalen Elemente (3) eine Omega-Typ Querschnitt.

11. Kabelführungselement (1) nach einem der Ansprüche 1 bis 10, **dadurch gekennzeichnet, daß** jedes Stützteil (5) in einem Kunststoffmaterial hergestellt und ist insbesondere durch Spritzgießen erhalten wird.

12. Kabelführungselement (1) nach einem der Ansprüche 1 bis 11, **dadurch gekennzeichnet, dass** die Stäbe (4) **gekennzeichnet sind durch** eine Industrieprofilierungsverfahren, wie Pultrusion erhalten.

13. Verfahren zur Herstellung des Kabelführungselement (1) nach einem der Ansprüche 1 bis 12, umfassend die Schritte:
- Erhalten von Längsstangen (4);
- Anordnen Versteifungsstücke (5) dieser Längsstäbe (4);
- Herstellung eines starren Montage der genannten Längsstangen (4) und die Stützteile (5), wobei die letzteren Stücke allmählich entlang der Längsholme (4) angeordnet sind;
- Erhalten der Boden (3) mit abgerundeten Haken versehen ist; und
**dadurch gekennzeichnet, dass** es die Schritte umfasst
- Montage des Boden (3) an den Trägern (2) in einer im wesentlichen koplanaren Position dieser Träger und dieser Unterseite.

14. Verfahren nach Anspruch 13, **dadurch gekennzeichnet, dass** es den Schritt des Formens des überVersteifungsStücke (5) auf der umfasst Längsstäbe (4).

15. Verfahren nach Anspruch 13, **dadurch gekennzeichnet, dass** es die folgenden Schritte umfasst:
- Anordnen jedes Stützteil (5) in Form von zwei Halbschalen (5a, 5b) aufweist, die miteinander zusammengebaut werden;
- Eingriff mit den Längsstäben (4) zwischen den Halbschalen (5a, 5b) von einem oder mehreren Stützteilen (5);
- Schließen der Halbschalen (5a, 5b) dieses oder dieser Stützteil (en) (5) durch Ausüben einer leichten Druck auf die Längsstangen (4) und
- Festsetzung dieser Halbschalen, die miteinander durch Kleben oder Schmelzen der Materialien.

## Revendications

1. Élément (1) de cheminement de câbles, comprenant au moins un longeron latéral (2) et un fond (3), dans lequel :
- au moins un longeron (2) comprend au moins deux barres longitudinales (4) et des pièces d'entretoisement (5) reliées rigidement à ces barres longitudinales (4), lesdites barres longitudinales (4) s'étendant sur l'ensemble de la longueur du longeron (2) et lesdites pièces d'entretoisement (5) étant aménagées de proche en proche sur ces barres longitudinales (4) et maintenant ces dernières à distance l'une de l'autre, des zones arrondies étant aménagées au niveau d'au moins un longeron (2) ;
- ledit fond (3) comprend des crochets arrondis (10) propres à venir s'engager sur lesdites zones arrondies,
**caractérisé en ce que**
- ledit fond (3) comprenant des crochets arrondis (10) est apte à pivoter entre une première position, dans laquelle le longeron (2) est sensiblement dans le même plan que ledit fond (3), et une deuxième position, dans laquelle le longeron (2) est sensiblement perpendiculaire à ce fond (3), et
- ledit longeron (2) et ledit fond (3) comprennent des moyens de verrouillage (7, 11, 13) respectifs, venant en prise lorsque le longeron (2) est amené dans ladite deuxième position.

2. Élément (1) de cheminement de câbles selon la revendication 1, **caractérisé en ce que** lesdits moyens de verrouillage comprennent des zones d'encliquetage (7, 11) aménagées sur ledit longeron (2), d'une part, et sur ledit fond (3), d'autre part.

3. Élément (1) de cheminement de câbles selon la revendication 1 ou la revendication 2, **caractérisé en ce qu'**au moins une pièce d'entretoisement (5) comporte une fenêtre (6) destinée à recevoir, de manière ajustée, l'un des crochets arrondis (10) que comprend le fond (3).

4. Élément (1) de cheminement de câbles selon la revendication 3, **caractérisé en ce que** lesdits moyens de verrouillage comprennent au moins une zone d'encliquetage (11) aménagée sur au moins un crochet (10) dudit fond (3) et au moins un bord correspondant (7) d'au moins une pièce d'entretoisement (5) délimitant ladite fenêtre (6), ce bord (7) venant en prise avec cette zone d'encliquetage (11) dans ladite deuxième position du longeron (2).

5. Élément (1) de cheminement de câbles selon la revendication 1, **caractérisé en ce que** lesdits moyens de verrouillage comprennent des crans aménagés sur lesdites zones arrondies des longerons (2) et sur les crochets arrondis (10) du fond (3), ces crans coopérant par enclenchement réciproque lors de la rotation du longeron pour bloquer à chaque positon angulaire ledit longeron à l'ouverture.

6. Élément (1) de cheminement de câbles selon l'une des revendications 1 à 5, **caractérisé en ce que** ledit fond (3) et ledit longeron (2) comprennent des moyens de butée et de positionnement (12) déterminant ladite deuxième position du longeron (2) par rapport au fond (3).

7. Élément (1) de cheminement de câbles selon l'une des revendications 1 à 6, **caractérisé en ce que** ledit fond comprend une pluralité de traverses (3) destinées à être reliées au longeron (2), ayant des extrémités formant lesdits crochets (10) ; ledit fond peut être constitué uniquement par ces traverses (3), ou peut être de structure monobloc, pleine ou partiellement ajourée, disposant d'extensions latérales régulièrement espacées formant lesdits crochets (10).

8. Élément (1) de cheminement de câbles selon la revendication 7, **caractérisé en ce que** lesdites traverses sont constituées en une seule pièce de matériau moulé, notamment en matière thermoplastique, renforcée ou non.

9. Élément (1) de cheminement de câbles selon la revendication 7, **caractérisé en ce que** chacune desdites traverses comprend une partie formant corps et au moins une partie d'extrémité formant ledit crochet, assemblée à ladite partie formant corps.

10. Élément (1) de cheminement de câbles selon l'une des revendications 7 à 9, **caractérisé en ce que** lesdites traverses (3) présentent une section de type "oméga".

11. Élément (1) de cheminement de câbles selon l'une des revendications 1 à 10, **caractérisé en ce que** chaque pièce d'entretoisement (5) est en matière synthétique, et est obtenue notamment par injection.

12. Élément (1) de cheminement de câbles selon l'une des revendications 1 à 11, **caractérisé en ce que** lesdites barres (4) sont obtenues par un procédé industriel de profilage, tel que la pultrusion.

13. Procédé de fabrication de l'élément (1) de cheminement de câbles selon l'une des revendications 1 à 12, comprend les étapes consistant à :
- obtenir des barres longitudinales (4) ;
- aménager des pièces d'entretoisement (5) de ces barres longitudinales (4) ;
- réaliser un assemblage rigide desdites barres longitudinales (4) et desdites pièces d'entretoisement (5), ces dernières étant disposées de proche en proche le long des barres longitudinales (4) ;
- obtenir ledit fond (3) muni des crochets arrondis ; et
**caractérisé en ce qu'**il comprend les étapes consistant à :
- assembler le fond (3) aux longerons (2) dans une position sensiblement co-planaire de ces longerons et de ce fond.

14. Procédé selon la revendication 13, **caractérisé en ce qu'**il comprend l'étape consistant à surmouler lesdites pièces d'entretoisement (5) sur lesdites barres longitudinales (4).

15. Procédé selon la revendication 13, **caractérisé en ce qu'**il comprend les étapes consistant :
- à aménager chaque pièce d'entretoisement (5) sous forme de deux demi-coquilles (5a, 5b) assemblables l'une à l'autre ;
- à engager lesdites barres longitudinales (4) entre les demi-coquilles (5a, 5b) d'une ou plusieurs pièces d'entretoisement (5) ;
- à refermer les demi-coquilles (5a, 5b) de cette ou ces pièces d'entretoisement (5) en exerçant un serrage sur lesdites barres longitudinales (4), et
- à fixer ces demi-coquilles l'une à l'autre par collage ou fusion des matériaux.
